# EUROPÄISCHE PATENTSCHRIFT

(11) **EP 3 369 696 B1**
(45) Veröffentlichungstag und Bekanntmachung des Hinweises auf die Patenterteilung: **18.09.2019**
(21) Anmeldenummer: 18159094.4
(22) Anmeldetag: 28.02.2018
(51) Int. Cl.: B66F 9/06, B62B 3/06

(54) **FLURFÖRDERFAHRZEUG MIT SENSORKONZEPT SOWIE FLURFÖRDERSYSTEM**
INDUSTRIAL TRUCK WITH SENSOR CONCEPT AND INDUSTRIAL TRUCK
CHARIOT DE MANUTENTION À CONCEPT DE CAPTEUR AINSI QUE SYSTÈME DE MANUTENTION

(30) Priorität: 03.03.2017 DE 102017203514
(43) Veröffentlichungstag der Anmeldung: 05.09.2018
(73) Patentinhaber: Robert Bosch GmbH, 70442 Stuttgart (DE)
(72) Erfinder: Junker, Christoph, 71522 Backnang (DE); Remlinger, Markus, 83714 Miesbach (DE); Mayer, Markus, 74076 Heilbronn (DE); Mueller, David, 80807 Muenchen (DE); Kneer, Sarah, 71717 Beilstein (DE); Hardt, Michael, 74613 Oehringen (DE)
(74) Vertreter: Maiß, Harald

(56) Entgegenhaltungen:
- EP-A1- 3 251 918
- JP-A- H04 217 595

## Beschreibung

### Stand der Technik

Die vorliegende Erfindung betrifft ein Flurförderfahrzeug mit einem verbesserten Sensorkonzept sowie ein Fördersystem mit einem Flurförderfahrzeug und einem zu fördernden Transportgut, insbesondere einem Rollwagen.

Flurförderfahrzeuge und Fördersysteme sind aus dem Stand der Technik in unterschiedlichen Ausgestaltungen bekannt. Beispielsweise ist aus der DE 102012023999 A1 ein Flurförderfahrzeug bekannt, bei welchem sämtliche Komponenten für eine Spurführung, Fahrregelung und Antrieb in einem Modul zusammengefasst sind. Das Modul ist als Fahrlenkmodul ausgebildet und soll Lenkbewegungen des Flurförderfahrzeugs ermöglichen. In der Transportlogistik sind jedoch auch Aufgaben zu lösen, bei welchen ein Flurförderfahrzeug autonom ein Transportgut aufnehmen und abgeben soll. Bei kleineren Gegenständen kann dieses beispielsweise mittels eines Greifers oder dgl., welche am Flurförderfahrzeug angeordnet ist, realisiert werden. Bei größeren Gegenständen, wie beispielsweise einem Rollwagen, ist dies nicht ohne weiteres möglich. EP 3 251 918 A1 stellt einen Stand der Technik nach Artikel 54(3) EPÜ dar. JP H04 217595 A beschreibt ein gattungsgemäße Flurförderzeug.

### Offenbarung der Erfindung

Das erfindungsgemäße Flurförderfahrzeug mit den Merkmalen des Anspruchs 1 weist demgegenüber den Vorteil auf, dass ein sicheres und beschädigungsfreies Transportieren von Transportgütern, insbesondere Rollwagen, welche auf eigenen Rollen (Standelementen) stehen, möglich ist. Hierzu umfasst das Flurförderfahrzeug, welches eingerichtet ist, unter das zu transportierende Transportgut zu fahren, eine Ladefläche, eingerichtet zur Aufnahme des Transportguts. Ferner umfasst das Flurförderfahrzeug eine Hubeinrichtung zum Anheben der Ladefläche und ein an einem ersten Ende der Ladefläche angeordnetes Fahrzeuggehäuse. Ferner ist ein erster Sensor vorgesehen, welcher eingerichtet ist, einen ersten Abstand zwischen dem Fahrzeuggehäuse und einem auf der Ladefläche befindlichen Transportgut zu erfassen. Weiterhin ist eine Steuereinheit vorgesehen, welche eingerichtet ist, basierend auf den mittels des ersten Sensors ermittelten Abständen die Hubeinrichtung zu betätigen, um das Transportgut anzuheben. Somit kann das Flurförderfahrzeug mit seiner Ladefläche unter das zu transportierende Transportgut fahren und wenn ein mittels des ersten Sensors erfasster Abstand zwischen dem Fahrzeuggehäuse und dem über der Ladefläche befindlichen Transportgut kleiner als ein vorbestimmter Abstand ist, wird die Hubeinrichtung angesteuert, um das Transportgut mittels Anheben der Ladefläche ebenfalls anzuheben. Dadurch wird das Transportgut vom Boden abgehoben und liegt auf der Ladefläche auf, so dass es mittels des Flurförderfahrzeugs an einen vorbestimmten Ort verfahren werden kann. Weiterhin umfasst das Flurförderfahrzeug einen zweiten Sensor, welcher eingerichtet ist, einen zweiten Abstand des Flurförderfahrzeugs zu einem hinter dem Flurförderfahrzeug befindlichen Transportgut zu erfassen, wobei die Steuereinheit eingerichtet ist, basierend auf dem mittels des zweiten Sensors ermittelten zweiten Abstand eine Annäherung an das Transportgut auszuführen. Somit kann eine sichere Positionierung des Flurförderfahrzeugs relativ zum Transportgut ermöglicht werden.

Die Unteransprüche zeigen bevorzugte Weiterbildungen der Erfindung.

Weiter bevorzugt ist die Steuereinheit eingerichtet, die Hubeinrichtung zu betätigen, um das Transportgut abzuladen. Hierbei wird vorzugsweise mittels des zweiten Sensors eine Position des beladenen Flurförderfahrzeugs bestimmt und dann die Ladefläche abgesenkt, um das Transportgut abzuladen.

Vorzugsweise ist der zweite Sensor an einem vom Fahrzeuggehäuse abgewandten zweiten Ende der Ladefläche angeordnet. Der erste Sensor ist vorzugsweise am Fahrzeuggehäuse angeordnet. Besonders bevorzugt ist der erste Sensor am Fahrzeuggehäuse in einer Ebene angeordnet, welche mittig, senkrecht zur Ladefläche, liegt.

Gemäß einer weiteren bevorzugten Ausgestaltung der vorliegenden Erfindung ist der zweite Sensor zur Erfassung eines hinter dem Flurförderfahrzeug stehenden Transportgutes derart eingerichtet, dass ein Abstand während einer Fahrt des Flurförderfahrzeugs kontinuierlich erfassbar ist.

Gemäß einer weiteren bevorzugten Ausgestaltung der Erfindung umfasst das Flurförderfahrzeug ferner einen dritten Sensor, welcher eingerichtet ist, Gegenstände zu erfassen, welche in einem Winkel von 90° einer Längsachse des Flurförderfahrzeugs angeordnet sind. Hierdurch ist es beispielsweise möglich, dass, wenn das zu transportierende Transportgut Füße oder Räder oder dgl. (Standelemente) aufweist, diese zu erfassen und anhand der erfassten Werte eine Position des zu transportierenden Transportgutes über der Ladefläche zu bestimmen. Hierdurch kann auch eine Redundanz mit den Werten des ersten Sensors, welcher den Abstand zwischen dem Fahrzeuggehäuse und dem unterfahrenden Transportgut ermittelt, erhalten werden. Der dritte Sensor ist vorzugsweise seitlich an der Lagefläche des Flurförderfahrzeugs angeordnet. Selbstverständlich ist es auch möglich, mehrere Sensoren entsprechend dem dritten Sensor an der Ladefläche vorzugsehen, um eine mehrfache Redundanz der Messergebnisse zu erhalten.

Weiter bevorzugt ist der dritte Sensor ferner eingerichtet, Standelemente, insbesondere Rollen oder Füße oder dgl., des Transportgutes zu erfassen und die Steuereinheit ist dabei eingerichtet, die Hubeinrichtung, basierend auf den erfassten Standelementen, zu betätigen. Hierdurch wird mittels der Steuereinheit die exakte Unterfahrposition des Flurförderfahrzeugs unter das Transportgut ermittelt und der richtige Zeitpunkt zum Anheben der Ladefläche mittels der Hubeinrichtung bestimmt.

Vorzugsweise ist die Steuereinheit ferner eingerichtet, basierend auf wenigstens zwei erfassten Standelementen des Transportgutes eine Art des Transportgutes zu bestimmen. Die Art des Transportgutes kann beispielsweise basierend auf dem erfassten Abstand des Transportgutes ermittelt werden. Beispielsweise können hier Rollwägen mit unterschiedlichen Längen, z.B. mit Längen 600 mm oder 400 mm, sicher unterschieden werden. Weiter bevorzugt ist die Steuereinheit eingerichtet, die Art des Transportgutes in Verbindung mit einer Fahrgeschwindigkeit des Flurförderfahrzeugs und/oder einer vorgegebenen konstanten Fahrgeschwindigkeit zu bestimmen, und/oder einen Abstand bis zu einem vom Flurförderfahrzeug abgewandten Ende des Transportgutes zu bestimmen. Hierdurch können Zusatzinformationen, welche zur Steuerung des Flurförderfahrzeugs hilfreich sind, wie z.B. Geschwindigkeit und Position des Flurförderfahrzeugs, ermittelt werden und bevorzugt mit vorhandenen erfassten Werten auf Plausibilität überprüft werden.

Besonders bevorzugt sind der erste Sensor und/oder der zweite Sensor und/oder der dritte Sensor jeweils als Ultraschallsensor ausgebildet. Alternativ können die Sensoren auch als optische Sensoren vorgesehen werden. Selbstverständlich ist auch eine beliebige Kombination von optischen Sensoren und Ultraschallsensoren für die Sensoren des Flurförderfahrzeugs möglich.

Besonders bevorzugt ist der erste Sensor am Fahrzeuggehäuse mittig in Horizontalrichtung und/oder Vertikalrichtung angeordnet. Dadurch ist eine sichere Erfassung des über der Ladefläche befindlichen Transportgutes möglich.

Weiter bevorzugt ist der zweite Sensor derart am Flurförderfahrzeug, insbesondere der Ladefläche, montiert, dass der Sensor durch Anheben oder Absenken der Ladefläche mittels der Hubeinheit ebenfalls insbesondere mit der Ladefläche angehoben oder abgesenkt wird. Dadurch kann der zweite Sensor während eines Annäherungsvorgangs des Flurförderfahrzeugs an das Transportgut auf Höhe des Transportgutes angeordnet sein und möglichst vertikal auf das zu erfassende Transportgut gerichtet sein, solange das Transportgut noch nicht unterfahren ist. Vor dem Unterfahren werden dann die Ladefläche und damit auch der zweite Sensor auf eine geeignete Unterfahrhöhe abgesenkt. Somit kann das Flurförderfahrzeug mit einer definiert angehobenen Ladefläche und auch einer definierten Position des zweiten Sensors sich dem Transportgut annähern und das Transportgut unterfahren.

Vorzugsweise ist noch ein vierter Sensor vorgesehen, welcher zur Feststellung dient, ob Transportgut auf der Ladefläche geladen ist oder nicht. Hierdurch kann insbesondere erfasst werden, falls missbräuchlich ein Transportgut oder etwas anderes auf der Ladefläche aufgestellt wurde. Es sei angemerkt, dass diese Erfassung bevorzugt auch mittels des ersten Sensors, welcher beispielsweise am Fahrzeuggehäuse angeordnet sein kann, erfasst werden kann.

Das Flurförderfahrzeug ist weiter bevorzugt ein autonom fahrendes Flurförderfahrzeug.

Weiter bevorzugt betrifft die vorliegende Erfindung ein Fördersystem, umfassend wenigstens ein Flurförderfahrzeug gemäß der Erfindung sowie wenigstens ein Transportgut, welches auf Füßen oder Rädern oder dgl. steht, so dass ein Freiraum zwischen dem Transportgut und einem Boden vorhanden ist. Dadurch kann das Flurförderfahrzeug unter das Transportgut fahren und dieses anheben und transportieren. Das Fördergut ist vorzugsweise ein Rollwagen mit Rollen, auf welchen der Rollwagen auf dem Boden steht. Der Rollwagen weist besonders bevorzugt vier Rollen auf. Weiter bevorzugt ist das Flurförderfahrzeug ein autonom fahrendes Flurförderfahrzeug.

Ein bevorzugtes erfindungsgemäßes Fördersystem umfasst bevorzugt eine Vielzahl von Flurförderfahrzeugen und eine Vielzahl von zu transportierenden Transportgütern und wird vorzugsweise in einer Fertigung zur Versorgung der Fertigung mit Teilen und/oder Werkzeugen und/oder dem Entsorgen von Abfall verwendet.

### Zeichnung

Nachfolgend werden bevorzugte Ausführungsbeispiele der Erfindung unter Bezugnahme auf die begleitende Zeichnung im Detail beschrieben. Gleiche bzw. funktional gleiche Bauteile sind dabei jeweils mit den gleichen Bezugszeichen bezeichnet. In der Zeichnung ist:
- Figur 1: eine schematische Seitenansicht eines Flurförderfahrzeugs und eines Transportguts vor einem Aufnehmen des Transportguts auf das Flurförderfahrzeug gemäß einem ersten Ausführungsbeispiel der Erfindung,
- Figur 2: eine schematische Seitenansicht des Flurförderfahrzeugs von Figur 1 während des Aufnehmens des Transportguts,
- Figur 3: eine schematische Draufsicht auf das Flurförderfahrzeug und das Transportgut von Figur 2,
- Figur 4: eine schematische Seitenansicht des Flurförderfahrzeugs, welches vollständig unter das Transportgut gefahren ist,
- Figur 5: eine schematische Seitenansicht des Flurförderfahrzeugs im angehobenen Zustand des Transportguts,
- Figur 6: eine schematische Seitenansicht eines Flurförderfahrzeugs zur Aufnahme eines Transportguts gemäß einem zweiten Ausführungsbeispiel der Erfindung,
- Figur 7: eine schematische Draufsicht auf den Zustand des Flurförderfahrzeugs von Figur 6, und
- Figur 8: eine schematische Seitenansicht eines Flurförderfahrzeugs mit einem Transportgut gemäß dem Ausführungsbeispiel der Erfindung im vollständig unterfahrenen Zustand des Transportgutes.

### Ausführungsformen der Erfindung

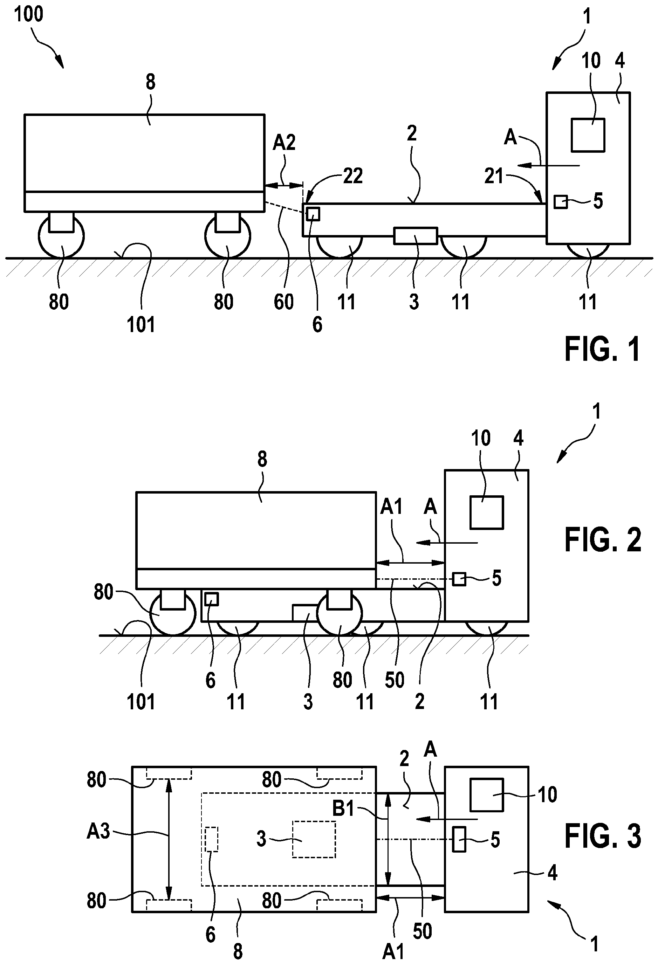

Nachfolgend wird unter Bezugnahme auf die Figuren 1 bis 5 ein autonomes Fördersystem 100 mit einem Flurförderfahrzeug 1 gemäß einem ersten bevorzugten Ausführungsbeispiel der Erfindung im Detail beschrieben.

Das autonome Flurfördersystem 100 umfasst neben dem Flurförderfahrzeug 1 wenigstens ein zu transportierendes Transportgut 8, welches in diesem Ausführungsbeispiel ein Rollwagen ist. Der Rollwagen selbst weist Rollen 80 auf, mit welchen er auf einem Untergrund 101 verschiebbar ist. In diesem Ausführungsbeispiel weist der Rollwagen vier Rollen 80 auf. Die Rollen können starr sein oder um eine vertikale Schwenkachse um 360° verschwenkbar sein (sog. Lenkrollen).

Das Flurförderfahrzeug 1 umfasst eine Ladefläche 2, welche eingerichtet ist, das Transportgut 8 aufzunehmen. Ferner umfasst das Flurförderfahrzeug 1 ein Fahrzeuggehäuse 4.

Das Fahrzeuggehäuse 4 ist an einem ersten Ende 21 der Ladefläche 2 des Flurförderfahrzeugs 1 angeordnet. Die Ladefläche 2 ist eine ebene, horizontale Fläche, um das Transportgut 8 sicher aufnehmen zu können.

Das Flurförderfahrzeug 1 umfasst ferner einen ersten Sensor 5 und einen zweiten Sensor 6. Der erste Sensor 5 ist am Fahrzeuggehäuse 4 angeordnet und in Richtung zur Ladefläche 2 ausgerichtet. Der zweite Sensor 6 ist an einem zweiten Ende 22 der Ladefläche 2 angeordnet. Der erste Sensor 5 ist eingerichtet, einen ersten Abstand A1 zwischen dem Fahrzeuggehäuse 4 und einem auf der Ladefläche 2 befindlichen Fördergut 8 zu erfassen. Der zweite Sensor 6 ist eingerichtet, einen zweiten Abstand A2 des Flurförderfahrzeugs von einem Objekt, insbesondere dem Transportgut 8, an einem zweiten Ende 22 der Ladefläche 2 zu erfassen. Die beiden Sensoren 5, 6 sind beispielsweise Ultraschallsensoren oder optische Sensoren. Ferner umfasst das Flurförderfahrzeug 1 eine Steuereinheit 10. Die Steuereinheit 10 ist in diesem Ausführungsbeispiel im Fahrzeuggehäuse 4 angeordnet und ist eingerichtet, basierend auf dem mittels des ersten Sensors 5 ermittelten ersten Abstand A1, eine Hubeinrichtung 3 zu betätigen.

Die Steuereinheit 10 ist ferner eingerichtet, basierend auf den zweiten Abstand A2 eine Annäherung und ein Unterfahren des Transportgutes zu ermöglichen.

Die Hubeinrichtung 3 ist unter der Ladefläche 2 angeordnet und vorgesehen, die Ladefläche 2 anzuheben und abzusenken. Die Hubeinrichtung 3 umfasst beispielsweise einen Hubzylinder und einen Gelenkmechanismus, um das Anheben und Absenken der Ladefläche 2 auszuführen.

Der zweite Sensor 6 ist ferner derart an der Ladefläche 2 angeordnet, dass eine Sensorebene bei einem Anheben und/oder Absenken der Ladefläche ebenfalls angehoben oder abgesenkt wird.

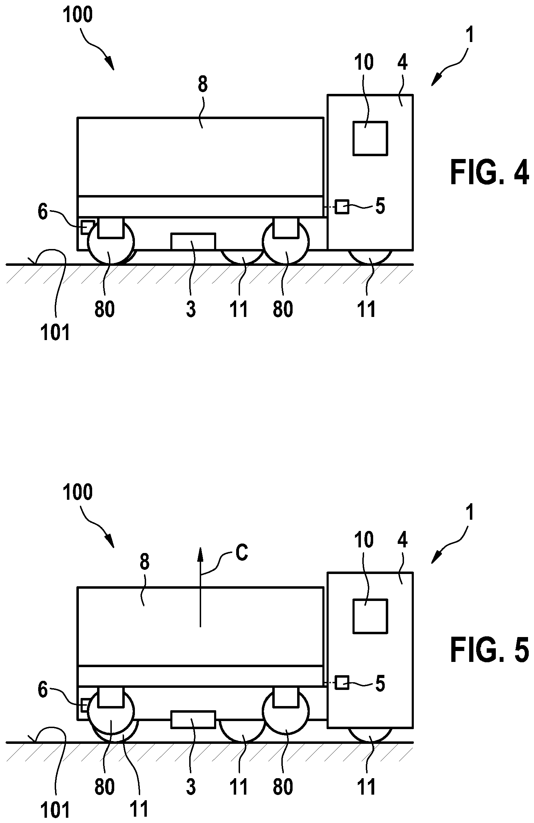

Das Flurförderfahrzeug 1 ist im Flurfördersystem 100 derart vorgesehen, dass es eingerichtet ist, unter das zu fördernde Transportgut 8 einfahren zu können. Hierbei ist eine Breite B1 der Ladefläche 2 kleiner als ein Rollenabstand A3 zwischen zwei Rollen des Transportguts 8 in der Breite des Transportgutes. Somit kann die Ladefläche 2 zwischen die Rollen 80 des Transportgutes eingefahren werden und durch Anheben mittels der Hubeinrichtung 3 vom Untergrund 101 abgehoben werden. Dieser Zustand ist in Figur 5 gezeigt.

Die Figuren 2, 3 und 4 zeigen das Unterfahren des Transportgutes 8. Wie aus Figur 3 ersichtlich ist, ist der erste Sensor 5 mittig am Fahrzeuggehäuse 4 angeordnet. Der erste Sensor 5 erfasst dabei den ersten Abstand A1 zum Transportgut 8 mittels Ultraschallwellen 50, welche in den Figuren 2 und 3 gestrichelt eingezeichnet sind. Figur 4 zeigt den Zustand an, in welchem das Flurförderfahrzeug 1 vollständig unter das Fördergut 8 heruntergefahren ist. Dabei steht das Fördergut 8 jedoch noch auf dem Untergrund 101.

Die Funktion des erfindungsgemäßen Flurfördersystems 100 ist dabei wie folgt. Wie aus Figur 1 ersichtlich ist, fährt das Flurförderfahrzeug 1 in Richtung des Pfeils A auf das zu transportierende Fördergut 8 zu. Hierbei ermittelt der zweite Sensor 6 mittels Ultraschallwellen 60 (s. Figur 1) einen zweiten Abstand A2 zum Fördergut 8. Das Fördergut 8 in diesem Ausführungsbeispiel sind Rollwägen, welche üblicherweise in sog. Supermarktspuren abgestellt sind. Hierbei handelt es sich um eine oder mehrere Führungsschienen, welche eine Position des Rollwagens seitlich begrenzen. Üblicherweise sind dabei mehrere Rollwagen in einer sog. Supermarktspur abgestellt. Das autonom fahrende Flurförderfahrzeug 1 des ersten Ausführungsbeispiels kennt dabei die Position des abzutransportierenden Fördergutes 8 und unterfährt dann, basierend auf den Annäherungsdaten des zweiten Sensors 6, den Rollwagen. Sobald der Rollwagen unterfahren ist, ermittelt der erste Sensor 5 den ersten Abstand A1 zum zu transportierenden Transportgut 8. Dies ist in den Figuren 2 und 3 durch die Ultraschallwellen 50 angedeutet. Dabei verfährt das Flurförderfahrzeug 1 weiter in Richtung des Pfeils B (s. Figuren 1 und 2).

Das Flurförderfahrzeug 1 fährt dabei noch so lange unter das zu transportierende Transportgut 8, bis die Ladefläche 2 vollständig unter dem Transportgut 8 steht, wie in Figur 4 dargestellt. Anschließend wird die Hubeinrichtung 3 betätigt, so dass das zu transportierende Transportgut 8 angehoben wird. Dabei liegt eine Bodenfläche des Transportgutes 8 vollständig auf der Ladefläche 2. Dies ist in Figur 5 durch den Pfeil C angedeutet. Anschließend kann das Flurförderfahrzeug 1 das aufgenommene Transportgut 8 an eine vorbestimmte Position verfahren.

Somit kann mittels des erfindungsgemäßen Flurförderfahrzeugs und des erfindungsgemäßen autonomen Flurfördersystems 100 ein Rollwagen oder dgl. definiert aufgenommen und abgestellt werden. Es sei angemerkt, dass statt der Rollwägen auch andere zu transportierende Transportgüter mittels des Flurförderfahrzeugs verfahren werden können, wie beispielsweise Käfige, welche vier Füße oder dgl. aufweisen. Das Transportgut kann dabei beliebig sein, solange die Möglichkeit besteht, dass das Flurförderfahrzeug 1 das Transportgut unterfahren und anheben kann.

Zum Absetzen des zu transportierenden Transportgutes 8 fährt das Flurförderfahrzeug 1 wieder bevorzugt in eine Supermarktspur ein und mittels des zweiten Sensors 6 kann dann ein zweiter Abstand A2, beispielsweise zu schon in der Supermarktspur befindlichen Transportgütern bestimmt werden und so ein exakter Punkt für ein Absetzen des auf dem Flurförderfahrzeug 1 befindlichen Transportgutes 8 bestimmt werden.

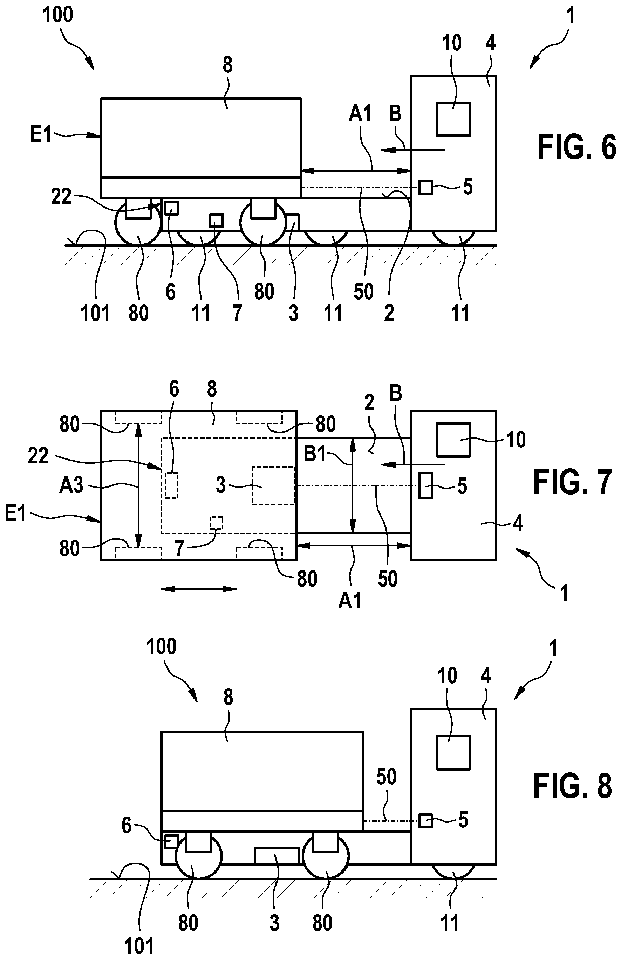

Die Figuren 6 bis 8 zeigen ein autonomes Flurfördersystem 100 gemäß einem zweiten Ausführungsbeispiel der Erfindung. Im Unterschied zum ersten Ausführungsbeispiel weist das Transportgut 8 des zweiten Ausführungsbeispiels eine reduzierte Länge auf. D.h., die Ladefläche 2 des Flurförderfahrzeugs 1 ist in Axialrichtung X-X des Flurförderfahrzeugs 1 länger als das zu transportierende Gut. Um hierbei ein schnelles Aufnehmen und Abgeben des zu transportierenden Transportgutes zu ermöglichen, wird das zu transportierende Transportgut 8 nicht bis vor zum Fahrergehäuse 4 auf das Flurförderfahrzeug 1 aufgenommen, sondern derart, dass ein erstes Ende E1 des Transportgutes 8 bündig mit dem zweiten Ende 22 der Ladefläche 2 abschließt. Hierzu wird der erste Sensor 5 verwendet, um den definierten Abstand zum Transportgut 8 während des Unterfahrens des Transportgutes zu bestimmen und dann die Hubeinrichtung 3 zu aktivieren, um das Transportgut 8 anzuheben.

Zusätzlich ist beim zweiten Ausführungsbeispiel noch ein dritter Sensor 7 vorgesehen, welcher seitlich an der Ladefläche 2 des Flurförderfahrzeugs 1 angeordnet ist. Der dritte Sensor 7 ermöglicht dabei die Erfassung der Standelemente, z.B. der der Räder und/oder Füße oder dgl., des Transportgutes 8 und kann so auch bestimmen, wie weit das Flurförderfahrzeug 1 schon unter das Transportgut 8 untergefahren ist. Somit kann eine redundante Messung des Unterfahrzustands des Flurförderfahrzeugs 1 sichergestellt werden, so dass ein sicheres und schnelles Anheben des Transportgutes 8 möglich ist.

Ferner kann mittels des dritten Sensors 7 auch ein Abstand der Standelemente bestimmt werden und dadurch Transportgüter mit verschiedenen Längen, beispielsweise Rollwägen mit unterschiedlichen Längen, erfasst werden. Somit kann der Abstand der Standelemente des Transportgutes als Unterscheidungsmerkmal für verschiedene Transportgüter herangezogen werden. Ein weiteres Unterscheidungsmerkmal wären beispielsweise eine Breite der Standelemente des Transportgutes. Für eine exakte Identifikation des Transportgutes kann hierbei beispielsweise auch durch eine Information hinsichtlich einer Fahrgeschwindigkeit des Förderfahrzeugs herangezogen werden. Alternativ könnte das System auch derart ausgelegt sein, dass die Flurförderfahrzeuge immer mit einer konstanten, vorgegebenen Fahrgeschwindigkeit bewegt werden, so dass ein Erfassen der Fahrgeschwindigkeit zur Bestimmung der Art des Transportgutes anhand des Abstandes der Standelemente nicht notwendig ist.

Figur 8 zeigt dabei den Zustand, in welchem das Flurförderfahrzeug 1 genau bis zum Ende des Transportgutes 8 das Transportgut unterfahren hat, so dass nun das Anheben des Transportgutes 8 ausgeführt werden kann.

Zu den beschriebenen Ausführungsbeispielen sei angemerkt, dass das autonome Flurfördersystem 100 selbstverständlich eine Vielzahl von Flurförderfahrzeugen und eine Vielzahl von Transportgütern 8 aufweist.

## Patentansprüche

1. Flurförderfahrzeug zur Förderung eines Transportgutes (8), wobei das Flurförderfahrzeug eingerichtet ist, unter das Transportgut (8) zu fahren, umfassend:
- eine Ladefläche (2), eingerichtet zur Aufnahme des Transportgutes (8),
- eine Hubeinrichtung (3) zum Anheben der Ladefläche (2), **dadurch gekennzeichnet, dass** es weiter umfasst:
- ein an einem ersten Ende (21) der Ladefläche (2) angeordnetes Fahrzeuggehäuse (4),
- einen ersten Sensor (5), welcher eingerichtet ist, einen ersten Abstand (A1) zwischen dem Fahrzeuggehäuse (4) und einem über und/oder auf der Ladefläche (2) befindlichen Transportgutes (8) zu erfassen,
- eine Steuereinheit (10), welche eingerichtet ist, basierend auf dem mittels des ersten Sensors (5) ermittelten ersten Abstandes (A1) die Hubeinrichtung (3) zu betätigen, um die Ladefläche anzuheben, und
- einen zweiten Sensor (6), welcher eingerichtet ist, einen zweiten Abstand (A2) zwischen dem Transportgut (8) und einem zweiten Ende (22) der Ladefläche (2) während einer Annäherung an das Transportgut zu erfassen, wobei die Steuereinheit (10) eingerichtet ist, basierend auf dem mittels des zweiten Sensors (6) ermittelten zweiten Abstandes (A2) eine Annäherung an das Transportgut (8) auszuführen.

2. Flurförderfahrzeug nach Anspruch 1, wobei die Steuereinheit eingerichtet ist, die Hubeinrichtung (3) zu betätigen, um die Ladefläche abzusenken.

3. Flurförderfahrzeug nach Anspruch 1 oder 2, wobei der zweite Sensor (6) an dem vom Fahrzeuggehäuse (4) abgewandten zweiten Ende (22) der Ladefläche (2) angeordnet ist und/oder wobei der zweite Sensor (6) derart an der Ladefläche angeordnet ist, um gemeinsam mit der Ladefläche durch die Hubeinrichtung bewegt zu werden, um eine Sensorebene zu ändern.

4. Flurförderfahrzeug nach einem der vorhergehenden Ansprüche, wobei die Steuereinheit (10) eingerichtet ist, den ersten Abstand (A1) während eines Unterfahrvorgangs des Fördergutes (8) zu erfassen.

5. Flurförderfahrzeug nach einem der vorhergehenden Ansprüche, ferner umfassend einen dritten Sensor (7), welcher eingerichtet ist, Gegenstände in einem Winkel von 90° zu einer Axialrichtung (X-X) des Flurförderfahrzeugs (1) zu erfassen.

6. Flurförderfahrzeug nach Anspruch 5, wobei der dritte Sensor (7) seitlich an der Ladefläche (2) angeordnet ist.

7. Flurförderfahrzeug nach Anspruch 5 oder 6, wobei der dritte Sensor (7) eingerichtet ist, Standelemente, insbesondere Rollen oder Füße, des Transportgutes zu erfassen und die Steuereinheit eingerichtet ist, die Hubeinrichtung (3), basierend auf den erfassten Standelementen, zu betätigen.

8. Flurförderfahrzeug nach Anspruch 7, wobei die Steuereinheit eingerichtet ist, basierend auf wenigstens zwei erfassten Standelementen des Transportgutes eine Art des Transportgutes und/oder einen Abstand des Flurförderfahrzeugs bis zu einem vom Flurförderfahrzeug abgewandten Ende des Transportgutes zu bestimmen.

9. Flurförderfahrzeug nach einem der vorhergehenden Ansprüche, wobei der erste Sensor (5) und/oder der zweite Sensor (6) und/oder der dritte Sensor (7) ein Ultraschallsensor oder ein optischer Sensor ist.

10. Flurförderfahrzeug nach einem der vorhergehenden Ansprüche, wobei der erste Sensor (5) am Fahrzeuggehäuse (4) mittig in Horizontalrichtung und/oder mittig in Vertikalrichtung am Fahrzeuggehäuse angeordnet ist.

11. Flurförderfahrzeug nach einem der vorhergehenden Ansprüche, umfassend eine autonome Steuereinheit für ein autonomes Fahren des Flurförderfahrzeugs.

12. Flurfördersystem (100), umfassend wenigstens ein Flurförderfahrzeug (1) gemäß einem der vorhergehenden Ansprüche und wenigstens ein Transportgut (8), welches vom Flurförderfahrzeug (1) unterfahrbar ist.

13. Flurfördersystem (100) nach einem der vorhergehenden Ansprüche, wobei das Transportgut (8) ein Rollwagen ist und/oder wobei das Flurförderfahrzeug (1) ein autonomes Flurförderfahrzeug ist.

14. Flurfördersystem (100) nach Anspruch 12 oder 13, wobei eine Breite (B1) der Ladefläche (2) kleiner ist als ein Rollenabstand (A3) zwischen zwei Rollen (80) des Transportgutes (8) in einer Breite des Transportgutes (8).

## Claims

1. Industrial truck for conveying an object (8), wherein the industrial truck is designed to drive in beneath the object (8), comprising:
- a loading surface (2), designed to accommodate the object (8),
- a lifting device (3) for raising the loading surface (2), **characterized in that** it also comprises:
- a cab body (4), which is arranged at a first end (21) of the loading surface (2),
- a first sensor (5), which is designed to sense a first distance (A1) between the cab body (4) and an object (8) located above and/or on the loading surface (2),
- a control unit (10), which is designed to actuate the lifting device (3) on the basis of the first distance (A1) established by means of the first sensor (5), in order to raise the loading surface, and
- a second sensor (6), which is designed to sense a second distance (A2) between the object (8) and a second end (22) of the loading surface (2) during approach towards the object, wherein the control unit (10) is designed to implement approach towards the object (8) on the basis of the second distance (A2) established by means of the second sensor (6).

2. Industrial truck according to Claim 1, wherein the control unit is designed to actuate the lifting device (3) in order to lower the loading surface.

3. Industrial truck according to Claim 1 or 2, wherein the second sensor (6) is arranged at the second end (22) of the loading surface (2), said second end being directed away from the cab body (4), and/or wherein the second sensor (6) is arranged on the loading surface such that it can be moved together with the loading surface by the lifting device in order to alter a sensor plane.

4. Industrial truck according to one of the preceding claims, wherein the control unit (10) is designed to sense the first distance (A1) while the vehicle is driving in beneath the object (8).

5. Industrial truck according to one of the preceding claims, also comprising a third sensor (7), which is designed to sense items at an angle of 90° in relation to an axial direction (X-X) of the industrial truck (1).

6. Industrial truck according to Claim 5, wherein the third sensor (7) is arranged laterally on the loading surface (2).

7. Industrial truck according to Claim 5 or 6, wherein the third sensor (7) is designed to sense support elements, in particular rollers or feet, of the object and the control unit is designed to actuate the lifting device (3) on the basis of the support elements sensed.

8. Industrial truck according to Claim 7, wherein the control unit is designed to determine an object type, and/or a distance between the industrial truck and an end of the object which is directed away from the industrial truck, on the basis of at least two object-support elements sensed.

9. Industrial truck according to one of the preceding claims, wherein the first sensor (5) and/or the second sensor (6) and/or the third sensor (7) are/is an ultrasonic sensor or an optical sensor.

10. Industrial truck according to one of the preceding claims, wherein the first sensor (5) is arranged centrally on the cab body (4) in the horizontal direction and/or in the vertical direction.

11. Industrial truck according to one of the preceding claims, comprising an autonomous control unit for autonomous driving of the industrial truck.

12. Floor-based conveying system (100) comprising at least one industrial truck (1) according to one of the preceding claims and at least one object (8), beneath which the industrial truck (1) can drive in.

13. Floor-based conveying system (100) according to Claim 12, wherein the object (8) is a cart, and/or wherein the industrial truck (1) is an autonomous industrial truck.

14. Floor-based conveying system (100) according to Claim 12 or 13, wherein a width (B1) of the loading surface (2) is smaller than a distance (A3) between two rollers (80) of the object (8) as seen over a width of the object (8).

## Revendications

1. Chariot de manutention servant au transport d'un produit à transporter (8), dans lequel le chariot de manutention est conçu pour passer en dessous du produit à transporter (8), comportant :
- une surface de chargement (2), conçue pour recevoir le produit à transporter (8),
- un dispositif de levage (3) servant à soulever la surface de chargement (2), **caractérisé en ce qu'**il comporte en outre :
- une carrosserie de véhicule (4) disposée à une première extrémité (21) de la surface de chargement (2),
- un premier capteur (5), lequel est conçu pour détecter une première distance (A1) entre la carrosserie de véhicule (4) et un produit à transporter (8) se trouvant au-dessus de la surface de chargement (2) et/ou sur celle-ci,
- une unité de commande (10), laquelle est conçue pour, sur la base de la première distance (A1) déterminée au moyen du premier capteur (5), actionner le dispositif de levage (3), afin de soulever la surface de chargement, et
- un deuxième capteur (6), lequel est conçu pour détecter une deuxième distance (A2) entre le produit à transporter (8) et une deuxième extrémité (22) de la surface de chargement (2) pendant un rapprochement du produit à transporter, l'unité de commande (10) étant conçue pour, sur la base de la deuxième distance (A2) déterminée au moyen du deuxième capteur (6), effectuer un rapprochement du produit à transporter (8).

2. Chariot de manutention selon la revendication 1, dans lequel l'unité de commande est conçue pour actionner le dispositif de levage (3) afin d'abaisser la surface de chargement.

3. Chariot de manutention selon la revendication 1 ou 2, dans lequel le deuxième capteur (6) est disposée à la deuxième extrémité (22) de la surface de chargement (2) opposée à la carrosserie de véhicule (4) et/ou dans lequel le deuxième capteur (6) est disposé sur la surface de chargement afin d'être déplacé, conjointement avec la surface de chargement, par le dispositif de levage, afin de modifier un plan de capteur.

4. Chariot de manutention selon l'une des revendications précédentes, dans lequel l'unité de commande (10) est conçue pour détecter la première distance (A1) pendant une opération de passage en dessous du produit à transporter (8).

5. Chariot de manutention selon l'une des revendications précédentes, comportant en outre un troisième capteur (7), lequel est conçu pour détecter des objets dans un angle de 90° par rapport à une direction axiale (X-X) du chariot de manutention (1).

6. Chariot de manutention selon la revendication 5, dans lequel le troisième capteur (7) est disposé latéralement sur la surface de chargement (2).

7. Chariot de manutention selon la revendication 5 ou 6, dans lequel le troisième capteur (7) est conçu pour détecter des éléments de support, en particulier des rouleaux ou des pieds, du produit à transporter et l'unité de commande est conçue pour actionner le dispositif de levage (3) sur la base des éléments de support détectés.

8. Chariot de manutention selon la revendication 7, dans lequel l'unité de commande est conçue pour, sur la base d'au moins deux éléments de support détectés du produit à transporter, déterminer un type de produit à transporter et/ou une distance du chariot de manutention à une extrémité du produit à transporter opposée au chariot de manutention.

9. Chariot de manutention selon l'une des revendications précédentes, dans lequel le premier capteur (5) et/ou le deuxième capteur (6) et/ou le troisième capteur (7) est/sont un capteur à ultrasons ou un capteur optique.

10. Chariot de manutention selon l'une des revendications précédentes, dans lequel le premier capteur (5) est disposé sur la carrosserie de véhicule (4) centralement dans la direction horizontale et/ou centralement dans la direction verticale sur la carrosserie de véhicule.

11. Chariot de manutention selon l'une des revendications précédentes, comportant une unité de commande autonome pour une conduite autonome du chariot de manutention.

12. Système de manutention (100), comportant au moins un chariot de manutention (1) selon l'une des revendications précédentes et au moins un produit à transporter (8), en dessous duquel le chariot de manutention (1) peut passer.

13. Système de manutention (100) selon la revendication 12, dans lequel le produit à transporter (8) est un chariot roulant et/ou dans lequel le chariot de manutention (1) est un chariot de manutention autonome.

14. Système de manutention (100) selon la revendication 12 ou 13, dans lequel une largeur (B1) de la surface de chargement (2) est inférieure à une distance (A3) entre deux rouleaux (80) du produit à transporter (8) dans une largeur du produit à transporter (8).
